# EUROPEAN PATENT SPECIFICATION

(11) **EP 1 566 532 B1**
(45) Date of publication and mention of the grant of the patent: **11.07.2007**
(21) Application number: 04003892.9
(22) Date of filing: 20.02.2004
(51) Int. Cl.: F02D 41/06, F02D 35/02, F02P 5/15, F02N 11/08

(54) **Method of reducing emissions in exhaust gases generated at a starting process of an internal combustion engine**
Verfahren zur Verringerung des während des Anlassvorgang erzeugten Abgasschadstoffausstosses einer Brennkraftmaschine
Procédé de réduction d'émissions de gaz d'échappement générés pendant le démarrage d'un moteur à combustion interne

(43) Date of publication of application: 24.08.2005
(73) Proprietor: Ford Global Technologies, LLC, Dearborn, MI 48126 (US)
(72) Inventor: Almkvist, Göran, 44331 Lerum (SE); Hakansson, Henrik, 41840 Göteborg (SE)
(74) Representative: Ekström, Nils

(56) References cited:
- EP-A- 0 859 149
- EP-A- 1 076 177
- EP-A- 1 176 299
- US-A- 5 697 340
- US-A1- 2003 221 665
- US-B1- 6 491 024

## Description

### TECHNICAL FIELD

The invention relates to a method for reducing emissions generated at a starting process of an internal combustion engine according to the preamble of claim 1.

### BACKGROUND ART

Legislation relating to environmental protection puts an increasingly stricter demand on restriction of toxious emissions from combustion engines. For this reason, modern vehicles are equipped with catalysts at which hydrocarbons are converted into water and carbon dioxide. In order for a catalyst to be efficient, the catalyst must have reached its operating temperature. Many attempts have been made to reduce the time needed for catalysts to reach their light off temperature (see US 6,491,024). Even though some these attempts have been successful and the efficient time needed to reach light off temperature has been reduced, starts and in particular cold starts are still responsible for a great proportion of total emissions of hydrocarbons from an engine. A significant reduction of emissions of hydrocarbons in the starting process of an engine would therefore generate a significant reduction of the total emissions of hydrocarbons from the engine.

In order to initiate the running of a combustion engine a starting process is required. The starting process is the process where the combustion engine is accelerated into an operational speed at which the engine runs in a stable manner. When the operational speed is reached, the engine assumes its normal operation and is controlled in a normal operating mode, in contrast to during the starting process, when the engine control unit runs a separate start routine. The operational speed is the rotational speed of the crankshaft and is normally measured in rpm.

Normally a starting process includes a first step when a starter accelerates a crank shaft of the engine to a rotational speed corresponding to maximum operational speed of the starter. Normally, the maximum operational speed of the starter is around 200 - 400 rpm. The combustions then accelerate the crankshaft into operational speed, which normally is set to an idling speed of an engine. Normally, in a starting process, the ignitions take place near minimum advance best torque (MBT) conditions in order to accelerate the crankshaft of the engine to operational speed of the engine as quickly as possible.

### DISCLOSURE OF INVENTION

An object of the invention is to reduce emissions from an internal combustion engine at a starting process of the engine. This object is achieved by a method according to the characterising portion of claim 1. In the method according to the invention that the crankshaft is brought into operational speed by torque generated from a starter while ignition combustions are set in retarded mode. By retarding the combustion, the flame generated by the ignition is allowed to sweep over a larger portion of the cylinder walls since a larger portion of the cylinder walls are exposed to the flame as the combustion is delayed under the expansion phase of the combustion chamber. A greater portion of the walls are exposed since the delayed combustion allows the piston to move further down toward bottom dead center (BTC) before combustion is completed According to the invention the combustion is retarded to an extent such that the point in time where 50% of the heat released in the combustion process in the cylinder occur in an interval between 45° and 135° crank angle (CA) after a top dead center (TDC) position of a piston arranged in the cylinder.

Under cold start conditions fuel condenses at the walls of the combustion chamber, a phenomenon called wall wetting. When a start procedure according to prior art is used, where the ignition timing is set to or near to MBT, this residual amount of fuel will be scraped off from the wall by the movements of a piston arranged in the combustion chamber and thus be released into the exhaust conduits. According to the invention the ignition is retarded under the starting process when the crank shaft is accelerated into operational speed. By retarding the ignitions, the flame generated by the ignitions will be allowed to sweep over a larger proportion of the cylinder walls with the result that a larger proportion of the fuel at cylinder walls will be burnt. The amount of residual fuel will therefore be decreased. A corresponding amount of reduction of the hydro carbon content in the exhaust at cold start will then occur.

Furthermore, by using a delayed combustion, and in particular since the duration of the combustion is prolonged, the top temperature in the combustion process is reduced which lead to a substantial reduction in NOx emissions. A positive effect on CO emissions have also been achieved when combustions occur at a lean air fuel ratio. However, the reduction of the CO emissions does not amount to the great extent as the reduction of the HC and NOx emissions.

The combustion is preferably prolonged to have a duration of over 140° CA, The delayed combustion and the prolonged duration is achieved by controlling the ignition timing.

However, retarding the ignition from MBT causes a reduction in the average torque generated by the combustions. The ignition should be retarded to such an extent that the combustions do not generate a sufficient torque to accelerate the crank shaft into operational speed within an acceptable time period of a few seconds. For this reason the invention contemplates the use of a starter to contribute to the acceleration of the crank shaft up to operational speed.

Preferably the combustions provide only an insignificant contribution of the torque needed to accelerate the crank shaft to a first rotational speed, which preferably essentially corresponds to or exceed an idling speed of the engine. By an insignificant contribution to the torque needed to accelerate the crank shaft into operational speed is meant that the average torque generated by the combustions can only insignificantly exceed the base engine friction torque which includes the torque to overcome engine internal friction and the torque to rotate the engine manufacturer-installed accessories (i.e., water pump, oil pump, etc.) The amount of torque generated by ignitions exceeding the base engine friction torque is contributing to the acceleration of the crank shaft. By insignificantly exceeding the engine base friction torque is in a preferred embodiment defined as that the contribution to the acceleration from the torque generated by the combustions is less than 50% of the torque accelerating the crank shaft, that is the total of the torque applied by the starter and generated from the ignitions. Preferably, the ignitions are retarded to such an extent that the contribution to the acceleration from the torque generated by the combustions is less than 20% of the torque accelerating the crank shaft. Still preferably the contribution to the acceleration from the torque generated by the combustions is less than 5% of the torque accelerating the crank shaft.

In preferred embodiments, the combustions are preferably retarded to such an extent that that the point in time where 50% of the heat released in the combustion process in the cylinder occur later than 60° CA after top dead center position of a piston arranged in the cylinder. In a preferred embodiment of the invention the point in time where 50% of the heat released in the combustion process in the cylinder occur later than 80° CA after top dead center position. In a still further preferred embodiment of the invention the point in time where 50% of the heat released in the combustion process in the cylinder occur later than 100° CA after top dead center position.

In still another embodiment of the invention, the crankshaft is brought into a first rotational speed by torque generated essentially only from the starter while combustions are set in said retarded mode, where the combustions are retarded to an extent such that the combustions generate an insignificant contribution, in relation to the torque generated by the starter, to accelerate the crankshaft into operational speed and that said first speed essentially corresponds to idling speed. After the crank shaft has reached the first rotational speed, the crankshaft further is accelerated to operational speed by torque generated by the combustions and/or the starter.

Preferably the starter continues to contribute to the acceleration of the crank shaft up to a second rotational speed which is in between the first rotational speed and the operational speed and that the combustions thereafter accelerates the crankshaft. The second rotational speed should preferably exceed the mean value of the first rotational speed and the operational speed, that is the second speed ≥ (first rotational speed + operational speed )/2.

### BRIEF DESCRIPTION OF DRAWINGS

The invention will be described in further detail below, with references to appended drawings, where
- Fig. 1: schematically shows a combustion engine at which the inventive method is used,
- Fig. 2: shows a graph of the crank shaft velocity as a function of time in a starting procedure according to prior art,
- Fig. 3: shows a graph of the crank shaft velocity as a function of time in a starting procedure according a first embodiment of the invention, and
- Fig. 4: shows a graph of the crank shaft velocity as a function of time in a starting procedure according a second embodiment of the invention.

### MODE(S) FOR CARRYING OUT THE INVENTION

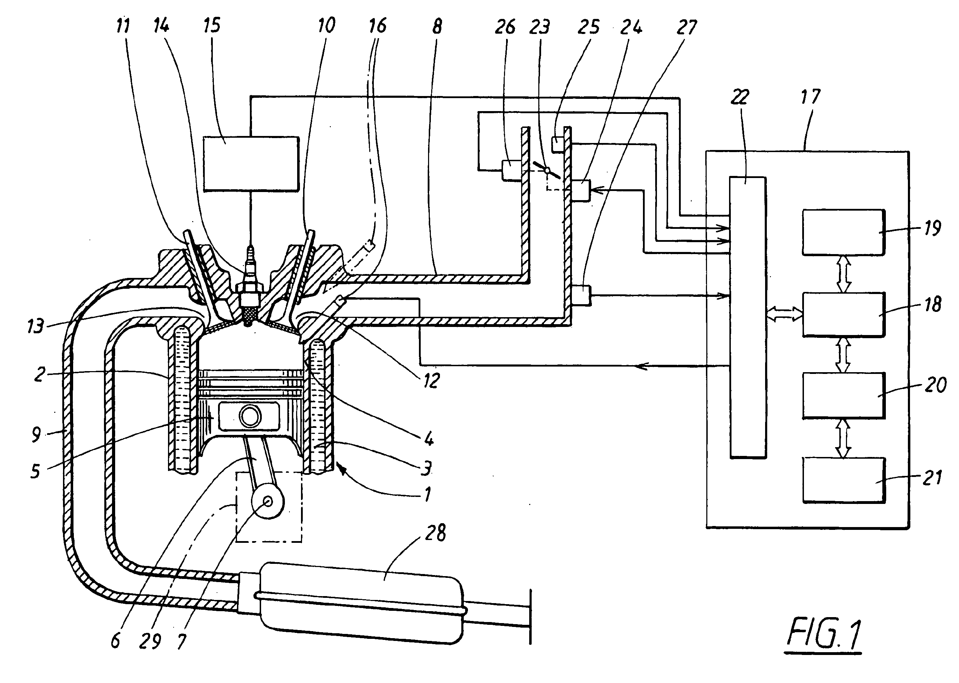

Figure 1 show a spark ignition combustion engine. The combustion engine 1 includes a set of combustion chambers 2, one of which is shown in the figure, formed in a cylinder block 3. The combustion chamber 2 is formed by a cylinder bore 4 in which and piston 5 is mounted. A connecting rod 6 transfers a reciprocating movement of the piston 5 into a rotational movement of a crank shaft 7.

The combustion engine is further equipped with an intake conduit 8 and an exhaust conduit 9. The gas flow through the combustion chamber 2 is controlled by at least one intake valve 10 and at least one exhaust valve 11 arranged at an intake port 12 and exhaust port 13 providing a connection between the intake conduit 8 and the combustion chamber 2 respective between the combustion chamber 2 and the exhaust conduit.

Furthermore, the combustion chamber 2 is provided with ignition means 14 in the form of a spark plug which timing is controlled by an ignition system 15.
Fuel is injected by a fuel injector 16, which can be arranged to inject the fuel directly in the combustion chamber, as a port injector as indicated with dashed lines in the figure or in any other known manner. The fuel injector is controlled in a conventional manner by an engine control unit 17. The engine control unit is conventional and includes a central processing unit 18 having access to computer readable storage medias as read only memories 19, random access memories 20 and non-volatile memories 21. The engine control unit communicates via an input output interface 22 connected to a communication bus arranged in a conventional manner.

The amount of air aspirated or charged into the combustion chamber can be controlled by a throttle valve 23, which is also controlled by the engine control unit in a conventional manner by controlling a valve actuator 24. In order to accurately control the throttle valve 23, the engine control unit 18 may make use of a set of sensors including an air mass sensor 25, an intake air pressure sensor 26 and a manifold pressure sensor 27.

A catalyst 28 may be arranged in the exhaust conduit 9.

The invention can be used on naturally aspirating engines as well as turbo charged engines.

A starter 29 is arranged to accelerate the crank shaft 7 into operational speed when starting the engine. The starter 29 may be a conventional starter motor, which is arranged to perform acceleration of the crankshaft up to operational speed of the crank shaft.

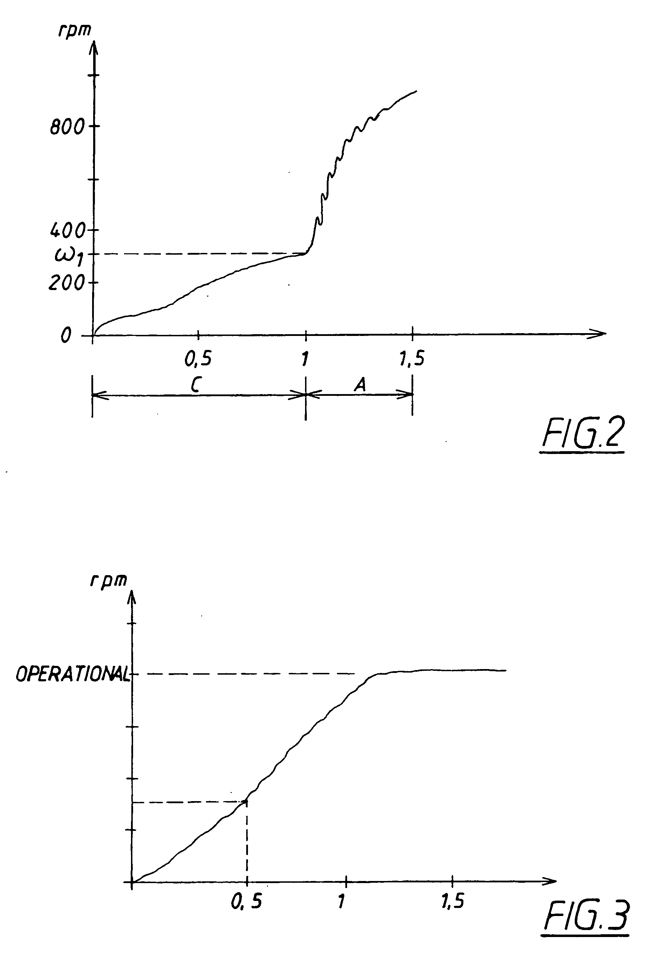

In a conventional starting process, such as shown in figure 2, the starting process can be subdivided into two different phases. First a cranking phase C, where the starter motor accelerates the engine until a first rotational speed ω₁, which generally has a magnitude of approximately 200 - 400 rpm. At this stage combustions begin which further accelerate the crank shaft of the engine up till operational speed at a second accelerating phase A. Operational speed is the velocity when speed at which the engine runs in a stable manner. When the operational speed is reached, the engine assumes its normal operation and is controlled in a normal operating mode, in contrast to during the starting process, when the engine control unit runs a separate start routine.

A graph of the velocity of the crank shaft when a starting process according to the invention is used is shown in figure 3. Here the starter accelerates the engine to or near an operational speed ω_{Operational}. Since the combustions are severely retarded, the ignitions do only contribute to the acceleration in an insignificant way. The acceleration is therefore not much influenced of the ignitions which lead to that the slope of the graph only changes insignificantly when ignitions start to occur. The starter continues to accelerate the crankshaft up till or near operational speed has been reached. In this example the operational speed corresponds to the idling speed.

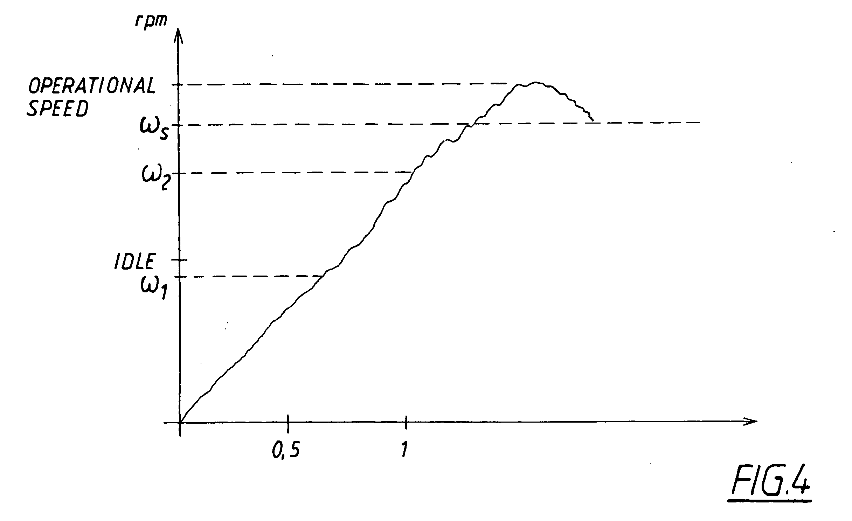

In a preferred embodiment of the invention the internal combustion engine is controlled in the start up procedure so that the crankshaft reaches a rotating speed which is greater than normal idling speed and is within a range of about 800 to about 2000 rpm. A graph of the velocity of the crank shaft in such a starting process is shown in figure 4.

The starter is used to accelerate the crankshaft, essentially without contribution from torque generated by the combustions, into a first rotational speed ω₁ that essentially correspond to the idling speed. After the first rotational speed have been reached, the crankshaft will be accelerated by the starter and the combustions at least up till a second rotational speed ω₂, which preferably is greater than the mean value of the first rotational speed and the operational speed. After the second rotational speed has been reached, the crankshaft may be accelerated only by the combustions, by both the combustions and the starter or alternatively by the starter only up till operational speed of the crankshaft.

The acceleration of the crankshaft in the starting process can contain a shoot over so that the crankshaft is accelerated further than a stable rotational speed wₛ at which the engine is kept running after having completed the acceleration of the crankshaft. The same principles regarding the manner in which the starter is contributing to the acceleration of the crankshaft applies regardless of whether a shoot over exists or not.

After having reached a specified high operational speed within the above specified range. The engine can from this point be controlled in accordance with the method disclosed in US 2002/0088229. The engine will then be controlled according to a method including the steps of supplying an air/fuel mixture with lambda value greater than 1 to the cylinder, controlling the internal combustion engine so that it works at high load, and controlling the inlet valve so that it opens after the piston has passed the top dead-center position. Furthermore the internal combustion engine is controlled so that the crankshaft rotates at an essentially constant speed within a range of about 1000 to about 2000 rpm until the catalyst has reached its light off temperature.

The starter should preferably be adapted to bring the crank shaft to operational speed, which is preferably equal to or exceed idling speed. For this reason the starter must be able to continuously accelerate the crank shaft to a rotating speed of 600 - 800 rpm or higher. A conventional starter motor which has been modified to provide higher rotational speed or a separate electrical motor such as an integrated starter generator can be used as a starter.

The method according to the invention as disclosed above can be used at both cold and warm start conditions. However, the method generates its most substantial contribution to reduction of HC emissions under cold start conditions.

## Claims

1. Method of reducing emissions in exhaust gases generated at a starting process of an internal combustion engine during start at which said combustion engine is brought to an operational speed at which the engine is running in a stable manner and at which the starting process of the engine is completed and the engine is controlled in a normal operating mode the method comprising the steps of: applying torque from a starter to bring a crankshaft into rotation; providing an air-fuel mixture in a cylinder and igniting the air-fuel mixture,
**characterised in that** the crankshaft is brought into operational speed by torque generated from the starter while combustions are set in retarded mode where the point in time where 50% of the heat released in the combustion process in the cylinder occur in an interval between 45° and 135° after a top dead center position of a piston arranged in the cylinder.

2. Method according to claim 1, **characterised in that** the combustion is retarded such that the point in time where 50% of the heat released in the combustion process in the cylinder occur later than 60° after top dead center position of a piston arranged in the cylinder.

3. Method according to claim 1, **characterised in that** the combustion is retarded such that the point in time where 50% of the heat released in the combustion process in the cylinder occur later than 80° after top dead center position of a piston arranged in the cylinder.

4. Method according to claim 1, **characterised in that** the combustion is retarded such that the point in time where 50% of the heat released in the combustion process in the cylinder occur later than 100° after top dead center position of a piston arranged in the cylinder.

5. Method according to any of claims 1-4, **characterised in that**, the crankshaft is brought into a first rotational speed by torque generated essentially only from the starter while combustions are set in said retarded mode, where the combustions are retarded to an extent such that the combustions generate an insignificant contribution, in relation to the torque generated by the starter, to accelerate the crankshaft into operational speed.

6. Method according to claim 5, **characterised in that** said first speed while the combustions generate an insignificant contribution essentially corresponds to or exceeds the idling speed on the engine.

7. Method according to claim 6, **characterised in that** said first speed is greater than 90% of the idling speed.

8. Method according to claim 1, **characterised in that** the combustions contribution to the torque accelerating the crankshaft is less than 50% of the torque accelerating the crank shaft.

9. Method according to claim 1, **characterised in that** the combustions contribution to the torque accelerating the crankshaft is less than 20% of the torque accelerating the crank shaft..

10. Method according to claim 1, **characterised in that** the combustions contribution to the torque accelerating the crankshaft is less than 5% of the torque accelerating the crank shaft.

11. Method according to any of preceding claims, **characterised in that** said operational speed corresponds to idling speed of the engine.

12. Method according to claim 11, **characterised in that** said idling speed is in the interval 600 - 800 rpm.

13. Method according to any of claims 1-10, **characterised in that** said operational speed is at least 700 rpm.

14. Method according to claim 13, **characterised in that** that said operational speed corresponds to an initial high load operation condition having an engine speed of between 1000 and 2000 rpm.

15. Method according to claim 14, **characterised in that** the crankshaft is brought into a first rotational speed by torque generated essentially only from the starter while combustions are set in said retarded mode, where the combustions are retarded to an extent such that the combustions generate an insignificant contribution, in relation to the torque generated by the starter, to accelerate the crankshaft into operational speed and that said first speed essentially corresponds to idling speed and that the crankshaft is accelerated to operational speed by torque generated by the combustions and/or the starter.

16. Method according to claim 15, **characterised in that** the starter continues to contribute to the acceleration of the crank shaft up to a second rotational speed which is in between the first rotational speed and the operational speed and that the combustions thereafter accelerates the crankshaft.

17. Method according to claim 16, **characterised in that** the second rotational speed exceeds the mean value of the first rotational speed and the operational speed, that is the second speed ≥ (first rotational speed + operational speed )/2

18. Method according to any of the preceding claims, **characterised in that** the engine is provided with a lean air fuel mixture under the start up procedure.

## Patentansprüche

1. Verfahren zum Reduzieren von Emissionen in Abgasen, die bei einem Startvorgang eines Verbrennungsmotors während des Starts erzeugt werden, bei dem der Verbrennungsmotor auf eine Betriebsdrehzahl gebracht wird, bei der der Motor stabil läuft und bei der der Startvorgang des Motors abgeschlossen ist und der Motor in einem normalen Betriebszustand gesteuert wird, wobei das Verfahren die folgenden Schritte umfasst:
Ausüben von Drehmoment von einem Starter, um eine Kurbelwelle in Drehung zu versetzen;
Bereitstellen eines Luft-Kraftstoff-Gemischs in einem Zylinder und Zünden des Luft-Kraftstoff-Gemischs,
**dadurch gekennzeichnet, dass** die Kurbelwelle durch Drehmoment, das von dem Starter erzeugt wird, auf Betriebsdrehzahl gebracht wird, wobei Verbrennungen in einem nach spät verstellten Modus eingestellt sind, in dem der Zeitpunkt, zu dem 50 % der bei dem Verbrennungsvorgang in dem Zylinder freigesetzten Wärme auftreten, in einem Intervall zwischen 45° und 135° nach einer oberen Totpunktposition eines in dem Zylinder angeordneten Kolbens liegt.

2. Verfahren nach Anspruch 1, **dadurch gekennzeichnet, dass** die Verbrennung so nach spät verstellt wird, dass der Zeitpunkt, zu dem 50 % der in dem Verbrennungsvorgang in dem Zylinder freigesetzten Wärme auftreten, später als 60° nach der oberen Totpunktposition eines in dem Zylinder angeordneten Kolbens liegt.

3. Verfahren nach Anspruch 1, **dadurch gekennzeichnet, dass** die Verbrennung so nach spät verstellt wird, dass der Zeitpunkt, zu dem 50 % der bei dem Verbrennungsvorgang in dem Zylinder freigesetzten Wärme auftreten, später als 80° nach der oberen Totpunktposition eines in dem Zylinder angeordneten Kolbens ist.

4. Verfahren nach Anspruch 1, **dadurch gekennzeichnet, dass** die Verbrennung so nach spät verstellt wird, dass der Zeitpunkt, zu dem 50 % der bei dem Verbrennungsvorgang in dem Zylinder freigesetzten Wärme auftreten, später als 100° nach der oberen Totpunktposition eines in dem Zylinder angeordneten Kolbens liegt.

5. Verfahren nach einem der Ansprüche 1-4, **dadurch gekennzeichnet, dass** die Kurbelwelle durch Drehmoment auf eine erste Drehzahl gebracht wird, das im Wesentlichen nur von dem Starter erzeugt wird, während Verbrennungen in dem nach spät verstellten Modus eingestellt sind, in dem die Verbrennungen in einem solchen Maß nach spät verstellt werden, dass die Verbrennungen im Verhältnis zu dem durch den Starter erzeugten Drehmoment einen unerheblichen Beitrag zum Beschleunigen der Kurbelwelle auf Betriebsdrehzahl erzeugen.

6. Verfahren nach Anspruch 5, **dadurch gekennzeichnet, dass** die erste Drehzahl, bei der die Verbrennungen einen unerheblichen Beitrag erzeugen, im Wesentlichen der Leerlaufdrehzahl des Motors entspricht oder sie übersteigt.

7. Verfahren nach Anspruch 6, **dadurch gekennzeichnet, dass** die erste Drehzahl mehr als 90 % der Leerlaufdrehzahl beträgt.

8. Verfahren nach Anspruch 1, **dadurch gekennzeichnet, dass** der Beitrag der Verbrennungen zu dem Drehmoment, das die Kurbelwelle beschleunigt, weniger als 50 % des Drehmomentes beträgt, das die Kurbelwelle beschleunigt.

9. Verfahren nach Anspruch 1, **dadurch gekennzeichnet, dass** der Beitrag der Verbrennungen zu dem Drehmoment, das die Kurbelwelle beschleunigt, weniger als 20 % des Drehmoments beträgt, das die Kurbelwelle beschleunigt.

10. Verfahren nach Anspruch 1, **dadurch gekennzeichnet, dass** der Beitrag der Verbrennungen zu dem Drehmoment, das die Kurbelwelle beschleunigt, weniger als 5 % des Drehmomentes beträgt, das die Kurbelwelle beschleunigt.

11. Verfahren nach einem der vorangehenden Ansprüche, **dadurch gekennzeichnet, dass** die Betriebsdrehzahl der Leerlaufdrehzahl des Motors entspricht.

12. Verfahren nach Anspruch 11, **dadurch gekennzeichnet, dass** die Leerlaufdrehzahl im Bereich von 600-800 U/min liegt.

13. Verfahren nach einem der Ansprüche 1-10, **dadurch gekennzeichnet, dass** die Betriebsdrehzahl wenigstens 700 U/min beträgt.

14. Verfahren nach Anspruch 13, **dadurch gekennzeichnet, dass** die Betriebsdrehzahl einem anfänglichen Betriebszustand hoher Last mit einer Motordrehzahl zwischen 1000 und 2000 U/min entspricht.

15. Verfahren nach Anspruch 14, **dadurch gekennzeichnet, dass** die Kurbelwelle durch Drehmoment, das im Wesentlichen nur von dem Starter erzeugt wird, auf eine erste Drehzahl gebracht wird, während Verbrennungen im nach spät verstellten Modus eingestellt sind, in dem die Verbrennungen in einem solchen Maß nach spät verstellt werden, dass die Verbrennungen im Verhältnis zu dem durch den Starter erzeugten Drehmoment einen unerheblichen Beitrag zum Beschleunigen der Kurbelwelle auf Betriebsdrehzahl erzeugen und dass die ersten Drehzahl im Wesentlichen Leerlaufdrehzahl entspricht und dass die Kurbelwelle durch Drehmoment, das von den Verbrennungen und/oder dem Starter erzeugt wird, auf Betriebsdrehzahl beschleunigt wird.

16. Verfahren nach Anspruch 15, **dadurch gekennzeichnet, dass** der Starter weiter zur Beschleunigung der Kurbelwelle bis auf eine zweite Drehzahl beiträgt, die zwischen der ersten Drehzahl und der Betriebsdrehzahl liegt, und dass danach die Verbrennungen die Kurbelwelle beschleunigen.

17. Verfahren nach Anspruch 16, **dadurch gekennzeichnet, dass** die zweite Drehzahl den Durchschnittswert der ersten Drehzahl und der Betriebsdrehzahl übersteigt, d. h.
zweite Drehzahl ≥ (erste Drehzahl + Betriebsdrehzahl)/2.

18. Verfahren nach einem der vorangehenden Ansprüche, **dadurch gekennzeichnet, dass** der Motor bei dem Startvorgang mit einem mageren Luft-Kraftstoff-Gemisch versorgt wird.

## Revendications

1. Procédé de réduction d'émissions de gaz d'échappement générés pendant le démarrage d'un moteur à combustion interne pendant lequel démarrage ledit moteur à combustion est amené à une vitesse de fonctionnement à laquelle le moteur fonctionne d'une manière stable et à laquelle le démarrage du moteur est réalisé et le moteur est commandé dans un mode de fonctionnement normal, le procédé comprenant les étapes suivantes consistant à : appliquer un couple à partir d'un démarreur pour mettre un vilebrequin en rotation ; fournir un mélange air-carburant dans un cylindre et allumer le mélange air-carburant,
**caractérisé en ce que** le vilebrequin est amené à la vitesse de fonctionnement par un couple généré par le démarreur tandis que des combustions sont mises en un mode retardé dans lequel le moment où 50 % de la chaleur dégagée pendant la combustion dans le cylindre se produit dns un intervalle compris entre 45° et 135° après une position de point mort d'un piston disposé dans le cylindre.

2. Procédé selon la revendication 1, **caractérisé en ce que** la combustion est retardée de telle sorte que le moment où 50 % de la chaleur dégagée pendant la combustion dans le cylindre se produit plus tard que 60° après la position de point mort d'un piston agencé dans le cylindre.

3. Procédé selon la revendication 1, **caractérisé en ce que** la combustion est retardée de telle sorte que le moment où 50 % de la chaleur dégagée pendant la combustion dans le cylindre se produit plus tard que 80° après la position de point mort d'un piston agencé dans le cylindre.

4. Procédé selon la revendication 1, **caractérisé en ce que** la combustion est retardée de telle sorte que le moment où 50 % de la chaleur dégagée pendant la combustion dans le cylindre se produit plus tard que 100° après la position de point mort d'un piston agencé dans le cylindre.

5. Procédé selon l'une quelconque des revendications 1 à 4, **caractérisé en ce que** le vilebrequin est amené à une première vitesse de rotation par un couple généré essentiellement uniquement par le démarreur tandis que des combustions sont mises en un mode retardé, dans lequel les combustions sont retardées à tel point que les combustions génèrent une contribution insignifiante, par rapport au couple généré par le démarreur, pour accélérer le vilebrequin jusqu'à la vitesse de fonctionnement.

6. Procédé selon la revendication 5, **caractérisé en ce que** ladite première vitesse, tandis que les combustions génèrent une contribution insignifiante, correspond essentiellement ou dépasse la vitesse de ralenti sur le moteur.

7. Procédé selon la revendication 6, **caractérisé en ce que** ladite première vitesse est supérieure à 90 % de la vitesse de ralenti.

8. Procédé selon la revendication 1, **caractérisé en ce que** la contribution de des combustions au couple accélérant le vilebrequin est inférieure à 50 % du couple accélérant le vilebrequin.

9. Procédé selon la revendication 1, **caractérisé en ce que** la contribution des combustions au couple accélérant le vilebrequin est inférieure à 20 % du couple accélérant le vilebrequin.

10. Procédé selon la revendication 1, **caractérisé en ce que** la contribution des combustions au couple accélérant le vilebrequin est inférieure à 5 % du couple accélérant le vilebrequin.

11. Procédé selon l'une quelconque des revendications précédentes, **caractérisé en ce que** ladite vitesse de fonctionnement correspond à la vitesse de ralenti du moteur.

12. Procédé selon la revendication 11, **caractérisé en ce que** ladite vitesse de ralenti se situe dans l'intervalle 600 - 800 tr/min.

13. Procédé selon l'une quelconque des revendications 1 à 10, **caractérisé en ce que** la vitesse de fonctionnement est au moins de 700 tr/min.

14. Procédé selon la revendication 13, **caractérisé en ce que** ladite vitesse de fonctionnement correspond à une condition de fonctionnement initiale à charge élevée ayant un régime moteur compris entre 1 000 et 2 000 tr/min.

15. Procédé selon la revendication 14, **caractérisé en ce que** le vilebrequin est amené à une première vitesse de rotation par un couple généré essentiellement seulement par le démarreur alors que des combustions sont mises en mode retardé, où les combustions sont retardées à tel point que les combustions génèrent une contribution insignifiante, par rapport au couple généré par le démarreur, pour accélérer le vilebrequin jusqu'à la vitesse de fonctionnement et **en ce que** ladite première vitesse correspond essentiellement à la vitesse de ralenti et **en ce que** le vilebrequin est accéléré jusqu'à la vitesse de fonctionnement par un couple généré par les combustions et/ou le démarreur.

16. Procédé selon la revendication 15, **caractérisé en ce que** le démarreur continue de contribuer à l'accélération du vilebrequin jusqu'à une deuxième vitesse de rotation qui est comprise entre la première vitesse de rotation et la vitesse de fonctionnement et **en ce que** la combustion accélère par la suite le vilebrequin.

17. Procédé selon la revendication 16, **caractérisé en ce que** la deuxième vitesse de rotation dépasse la valeur moyenne de la première vitesse de rotation et de la vitesse de fonctionnement, c'est-à-dire la deuxième vitesse ≥ (première vitesse de rotation + vitesse de fonctionnement)/2.

18. Procédé selon l'une quelconque des revendications précédentes, **caractérisé en ce que** le moteur dispose d'un mélange air-carburant pauvre pendant la procédure de démarrage.
